(19)

Europäisches
Patentamt

European
Patent Office

Office européen
des brevets

(11) **EP 2 119 262 B1**

(12) **EUROPEAN PATENT SPECIFICATION**

(45) Date of publication and mention
of the grant of the patent:
**06.01.2016 Bulletin 2016/01**

(21) Application number: **08727382.7**

(22) Date of filing: **07.01.2008**

(51) Int Cl.:
***H04W 28/08*** *(2009.01)*      *H04W 84/12* *(2009.01)*

(86) International application number:
**PCT/US2008/050406**

(87) International publication number:
**WO 2008/088964 (24.07.2008 Gazette 2008/30)**

(54) **PROACTIVE PER-CLASS LOAD MANAGEMENT**

PROAKTIVE KLASSENWEISE LASTVERWALTUNG

GESTION PROACTIVE D'UNE CHARGE PAR CLASSE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **11.01.2007 US 884575 P
05.10.2007 US 868281**

(43) Date of publication of application:
**18.11.2009 Bulletin 2009/47**

(73) Proprietor: **NTT DoCoMo, Inc.
Chiyoda-Ku
Tokyo 100-6150 (JP)**

(72) Inventors:
• **JEONG, Moo Ryong**
**Albany, California 94706 (US)**
• **WATANABE, Fujio**
**Union City, 94587 (US)**
• **INAMURA, Hiroshi**
**Cupertino, CA 95014 (US)**

(74) Representative: **Skone James, Robert Edmund
Gill Jennings & Every LLP
The Broadgate Tower
20 Primrose Street
London EC2A 2ES (GB)**

(56) References cited:
**GB-A- 2 414 899        US-A1- 2003 108 000
US-A1- 2004 053 624     US-A1- 2004 053 624
US-A1- 2005 053 046     US-A1- 2005 107 090
US-A1- 2006 135 173     US-A1- 2006 142 021**

• **WI-FI ALLIANCE: "Wi-Fi CERTIFIED for WMM -
Support for Multimedia Applications with Quality
of Service in Wi-Fi Networks", INTERNET
CITATION, September 2004 (2004-09),
XP002461416, Retrieved from the Internet: URL:
http://www.wi-fi.org/files/wp_1_WMM%20
QoS%20In%20Wi-Fi_9-1-04.pdf [retrieved on
2007-12-06]**

**Description**

BACKGROUND OF THE INVENTION

1. Field of the Invention

The present invention relates to wireless local networks (WLAN). In particular, the present invention relates to proactive load management in a WLAN using such metrics as per-class station count or per-class traffic specification.

2. Discussion of the Related Art

The service quality in a WLAN is generally expressed by two measures: (a) the "grade of service" (GoS), and (b) the "quality of service" (QoS). One measure of GoS is a probability that a successful session or connection is not achieved. An unsuccessful session occurs as a result of a heavy traffic load on the network and can result in the session being either delayed or lost. An unsuccessful session is most likely at a busy time of the day, when the amount of traffic is the most.

GoS is commonly expressed as the fraction of sessions that fail to receive immediate service ("lost sessions"), or the fraction of sessions that are forced to wait longer than a given time for service ("delayed sessions"). More specifically, GoS can be expressed, for example, by a probability based on the Erlang B formula, the Extended Erlang B formula, the Engset formula, the Erlang C formula, the Binomial formula, or another probability formula, as a function of the number of users, the user behavior, and the intensity of the traffic. User behavior includes, for example, clearing the user immediately, having the user wait until the traffic decreases, or having the user wait for a time interval, and excluded from the system if the traffic condition does not improve. Traffic intensity may be measured based on total traffic from all users or an average per user. Some parameters common to most formulae are number of users (with or without active call), voice capacity of a system or a base station, and traffic intensity. These formulae are described, for example, in the text "Cellular Radio - Principles and Design," J. Raymond C.V. Macario, McGraw Hill (1993), pp.195-201.

GoS measures service based on network traffic performance. Generally, GoS of 0.01 or less (i.e., no more than one session in 100 sessions is lost or delayed) is required for conventional telephone service. In contrast, QoS is more concerned with user experience during active sessions and is commonly expressed by parameters such as data rate, delay, voice quality, error probability, and packets loss. As real-time applications (e.g., streaming multimedia, voice over IP (VoIP), and IP-TV) and data applications over 802.11 WLAN are desired, load management to keep both GoS and QoS of the applications at appropriate levels is increasingly important.

On one hand, maintaining GoS requires proactive load management, which takes into consideration both potential load (i.e., load originating from inactive users) and existing load (i.e., load from active users). A load management decision by proactive load management applies to both active and inactive users, and it may result in some users changing network attachment. On the other hand, maintaining QoS requires reactive load management, which considers only existing load and requires applying management decision only to active users. Proactive load management may affect QoS, and reactive load management may affect GoS.

Significant improvement in QoS management for 802.11 WLANs has been made in recent years. For example, under 802.11e, access to the wireless medium is prioritized according to four access categories (ACs): voice (AC_VO), video (AC_VI), best effort (AC_BE), and background (AC_BK). 802.11e also maps the ACs to eight user priorities (UPs) which are defined in the 802.1D standard. Furthermore, developing standards 802.11k and 802.11v allow various kinds of reactive load management to improve QoS. For example, an AP may include information regarding available admission capacity, on a per-UP basis, in a beacon, a probe response, or a roaming management request message. The available admission capacity of a UP specifies the remaining amount of medium time available via explicit admission control for the corresponding UP. The information helps a roaming wireless station to select an access point (AP) that is likely to accept its admission control requests and provides it better QoS in a less loaded network. Available admission capacity of a UP is especially important to a wireless station that has already an on-going session served by the UP, because there is immediate need for the network resource. For a wireless station without an on-going session, however, available admission capacities may not be as meaningful because the resource is not immediate needed. In that case, GoS that indicates a probability of an unsuccessful session may be a more meaningful criterion in its selection of an AP.

Under 802.11 k and 802.11v, an AP may send a neighbor report response message or a roam management request message to a wireless station either in response to a message from the wireless station or autonomously. The neighbor report response messages and the roam management request message each include roaming candidate preference of one ore more neighboring APs. A wireless station receiving a roaming management request message or a neighbor report response message containing the roaming candidate preference list may use this preference list (with their individual network roaming preference values) to make roaming decisions. The network provides the preference list to further current network management goals for network load balancing. However, such network management achieves only a QoS target, because the roaming candidate preference list cannot be determined from the appropriate load information that addresses GoS.

The current 802.11 standard does not address proactive load management for GoS because load management in the telephone network is not directly applicable to real-time services in a 802.11 WLAN. Conventional telephone networks are designed with assumptions that are not valid for real-time services (e.g. VoIP) over 802.11 WLAN. First, conventional telephone networks are optimized for voice applications. However, since voice and other real-time services under 802.11 WLAN are only a part of the many services sharing the network with data service, 802.11 WLAN is not optimized for such real-time services. Second, while most aspects and layers of a voice service infrastructure, together with the terminals, are under the control of telephone network operators, no single entity controls an 802.11 WLAN. In an 802.11 WLAN, infrastructure and terminals are often provided and operated by multiple entities, and 802.11 is a single layer which defines only the air interface.

In a conventional telephone network, terminals are dedicated and optimized for voice, so that load management may be accomplished based only on the number of terminals. However, in a typical 802.11 WLAN, only a few terminals are dedicated voice terminals. In fact, many terminals do not even have appropriate hardware and software required to support voice or other real-time services. Even with appropriate hardware and software, a terminal often requires a configuration application to be run to enable voice or other real-time services. Therefore, to provide proactive load management in 802.11 WLAN, in addition to the number of terminals, terminal classification is required. However, classification of voice terminals is not trivial in 802.11 because, as mentioned above, 802.11 is only a single layer which defines only the air interface. At the 802.11 layer, without help from other layers or interfaces, there is not enough information to determine whether a terminal is dedicated, capable of, or appropriately configured for voice services. Some voice terminals may only be identified after a voice session is initiated. Consequently, only terminals with active calls can be included in the load management, thus precluding proactive load management. With the help provided from other layers and interfaces, voice terminals may be identified, but such identification is often a nontrivial task under 802.11.

Voice Flow Classification (VFC), such as described in the Aruba Networks' press release of December 12, 2005, entitled "Aruba Networks Announces Mobile Voice Over IP Enhancements to the Enterprise Mobile Edge -- Unique Voice Flow Classification Capability ensures Superior Voice Quality, Security and Scalability," at http://www.arubanetworks.com/company/press/2005/12/12/a, allows for voice terminal classification using an integrated "state-ful" firewall, which is not an entity specifically defined under 802.11. The state-ful firewall may identify, classify, and prioritize voice traffic by monitoring voice signaling protocols, including the Session Initiation Protocol (SIP), SpectraLink Voice Priority (SVP), Vocera and Cisco Skinny Client Control Protocol (SCCP). Once identified and classified, every voice call is continuously monitored on the WLAN, resulting in a real-time count of the actual number of active (off-hook) calls. This information is then used by a Call Admission Control (CAC) function to limit the number of calls on a particular AP, thereby preventing voice degradation resulting from excessive high-priority traffic, and preserving a predictable minimum amount of bandwidth for use by data and other traffic types. When the maximum number of voice calls is reached on a given AP, other voice-capable devices not on calls in that AP's service area are seamlessly transferred for load balancing reasons to other adjacent APs' service areas, thus avoiding disruption of calls in progress and ensuring that the network is available for new calls.

Classification of voice terminals in VFC, however, depends solely on a non-802.11 entity that operates on non-802.11 layers and interfaces. Because such layers and interfaces are beyond the scope of 802.11 standards, VFC services are generally vendor-specific implementations that may not be compatible with APs and terminals of other vendors. Furthermore, as load balancing on a given AP takes place only after the maximum number of voice calls is reached, load balancing using VFC is not proactive.

In addition, unlike terminals in a conventional telephone network, in which each voice terminal requires the same predictable amount of resources, network resource requirements for voice terminals under 802.11 are not the same: network resource requirements for a voice application in 802.11 may vary depending on the choice of codec and other parameters. The choice may be made "on-the-fly" through SIP signaling. Therefore, load management based only on the number of terminals may not be optimal under 802.11 WLAN.

US-A-2004/0053624 describes a method and system for optimal load balancing in a hybrid wired/wireless network including the step of receiving a polling message from an access device by at least one of a plurality of access points. In response to the polling message, a load on one or more of the access points may be determined and the determined load of one or more of the access points may be received by the access device. One or more of the access points located within an operating range of the access device may interpret the polling message. An access point having a least load may be selected by an access device to provide service.

Further load balancing systems and methods are described in GB-A-2414899, US-A-2005/053046 and WI-FI ALLIANCE: "Wi-Fi CERTIFIED for WMM - Support for Multimedia Applications with Quality of Service in Wi-Fi Networks", INTERNET CITATION, September 2004 (2004-09).

SUMMARY OF THE INVENTION

The above identified problems in the art are overcome by the method for proactively managing the load of a wireless network comprising the features of method claim 1. Preferred embodiments of the invention are set out in the dependent claims.

According to the present invention, an apparatus and a method proactively manage the load of an 802.11 WLAN based on one or more per-class station counts, in which the stations are classified according to access categories (ACs), user priorities (UPs), or services. Alternatively, the load of an 802.11 WLAN may also be proactively managed based on provisional or non-provisional per-class traffic specification (TSPECs), depending upon the status of traffic streams (TSs).

In the present invention, load balancing may be achieved by (a) collecting per-class station count information, either through an AP, or through exchanges with neighboring APs or wireless stations, and (b) proactively influencing association decisions between wireless stations and APs. A wireless station may be classified according to ACs, UPs, or services. Alternatively, load balancing may be achieved by (a) collecting provisional or non-provision per-class traffic specification (TSPEC) through an AP, or through exchanges with neighboring APs or wireless stations, and (b) proactively influencing association decisions between wireless stations and APs.

According to the present invention, per-class station count information or TSPEC is collected for wireless stations classified according to ACs, UPs or services. To indicate the class or classes of traffic it generates, a wireless station may send a message which includes a traffic generation information element in which the wireless station sets one or more traffic generation (TG) flags corresponding to one or more ACs, UPs or services. The traffic generation information element need not cover all ACs or UPs that are supported in the network. The TG flag of a class is set if the wireless station is generating or expects to generate traffic belonging to the corresponding class, when a traffic stream (TS) of the class is active in the wireless station, or when a TS of the class is expected to be active sometime during the operation of the wireless station. If the wireless station is in a scanning mode, and the message may be a probe request message. Alternatively, if the wireless station is in the process of authentication, the message may be an authentication message. Similarly, if the wireless station is in the process of associating or reassociating with an access point (AP), the message may be an association request message or a reassociation request message. In general, a traffic generation information element may be included in a message or a frame that is sent from the wireless station to an AP.

According to the present invention, the wireless station is associated with an AP, and the message may be a neighbor report request message, a roam management query message, or an ADDTS (Add Traffic Stream) request message destined to the serving AP. A TG flag of a user priority (UP) is considered set if the ADDTS request message is associated with a traffic stream (TS) that has the user priority (UP) in the traffic specification (TSPEC) or in the traffic classification (TCLAS). A TG flag of an access category (AC) is considered as set if the ADDTS request message is associated with a traffic stream (TS) that has a user priority (UP) that can be mapped to the AC.

According to the present invention, the TG flag of a voice access category (AC_VO) or a UP priority 6 or 7 (UP6 or UP7) may be set if the wireless station is a VoIP terminal, a VoIP application is running within the wireless station, a voice session is on-going, or the wireless station may be in a standby mode, waiting for the arrival or generation of a voice session. The wireless station may be registered with a SIP server so that a voice session may be initiated when a call arrives.

According to the present invention, the TG flag of a class is set if a push or pull application that uses the class is running within the wireless station, a push or pull service session is on-going, or the wireless station may be in a standby mode, waiting for the arrival of a push or pull service session. The wireless station may be registered with a session initiation protocol (SIP) server, so that the push or pull service session may be initiated on the push or pull application's arrival.

According to the present invention, upon receiving a message with a traffic generation information element, the AP updates station counts of per-class station count information based on each TG flag in the traffic generation information element. When the message received by the AP is an association request message or a reassociation request message, the station count of a class is increased, when the AP is accepting the association or reassociation request. When the message received by an AP is a neighbor report request message, roam management query message, or a ADDTS request message, the AP increases the station count for each class that is not previously set. The AP decreases the station count for a class, when the AP receives a hand-off message, a disassociation notification message or a deauthentication notification message from a wireless station that was associated with it and whose TG flag of that class is set.

According to the present invention, an AP monitors the messages that flow through it, and detects, or receives notification of, a successful registration of one of its associated wireless station with a SIP server for a class of service (e.g., AC_VO), and updates the station count for that class on detection of the successful registration. An AP need monitor only the message flow that flows between the wireless station (with the TG flag of relevant class set) and the SIP server.

According to the present invention, per-class station count information is collected for only the wireless stations that generate traffic of specific AC or ACs, UP or UPs operating in the network, and the AP updates the class station counts for the ACs or UPs upon association, reassociation, disassociation, deauthentication, or handoff of a wireless station.

According to the present invention, in which per-class station count information is collected, an AP receiving a message with one or more AC U-APSD flags updates per-class station count information based on each U-APSD flag in the message. The message may be an association request message or a reassociation request message. An AC may update the station count of one or more ACs upon association, reassociation, disassociation, deauthentication, or handoff of a wireless station from which it received a message with one or more AC U-APSD flags set.

According to the present invention, a method and an apparatus collect per-class TSPEC information; under that method, a wireless station sends a traffic stream (TS) management message, which includes a provisional flag and traffic specification (TSPEC) of a traffic stream (TS). The TSPEC characterizes the quality of service (QoS) of the TS. A TS and associated TSPEC are provisional if created by a TS management message with the provisional flag set. A TS and associated TSPEC are non-provisional if created by a TS management message with the provisional flag unset. In non-provisional TS and TSPEC, an AP starts allocating resource for the TS upon creation, and stops allocating resource for the TS, upon deletion of the TS. Resource allocation by an AP is not affected by the creation or deletion of a provisional TS and TSPEC. A TS may be created by an ADDTS (Add Traffic Stream) request message. A TSPEC of a TS is considered as that of a UP, if the ADDTS request message is associated with a TS that has the UP in the TSPEC or in the traffic classification (TCLAS). A TSPEC is considered as that of an AC if the ADDTS request message is associated with a TS that has a UP that is mapped to the AC. A TS may be deleted by a DELTS (Delete Traffic Stream) request message. A TSPEC of a TS is considered as that of a UP, if the DELTS request message is associated with a TS that has the UP in the TSPEC or in the TCLAS. A TSPEC is considered as that of an AC, if the ADDTS request message is associated with a TS that has a user priority UP that is mapped to the AC.

According to the present invention, a TS may be created by a TS management message for AC_VO, if a VoIP application is running within the wireless station. The provisional flag is unset if a voice session is on-going or is in the process of session initiation. The provisional flag is set if the wireless station is in standby waiting for the arrival or generation of a voice session. The wireless station may be registered with a SIP server so that a voice session may be initiated on its arrival.

According to the present invention, a TS management message for a class may be sent if a push or pull application that uses the class is running within the wireless station. The provisional flag is unset if the push or pull service session is on-going or is in the process of session initiation. The provisional flag is set if the wireless station is in standby waiting for the arrival of the push or pull service session. The wireless station may be registered with a session initiation protocol (SIP) server so that a push or pull service session may be initiated on its arrival.

According to the present invention, the wireless station is in the process of associating or reassociating with an AP, and the TS management message is an association request message or a reassociation request message with resource information container (RIC) as defined in 802.11r. In another embodiment, the wireless station is associated with an AP, and the TS management message is a neighbor report request message, or a roam management query message destined to the serving AP. The AP may update the TSPECs of one or more classes upon receiving a TS management message, an association request message, a reassociation request message, an ADDTS request message, a DELTS request message, a disassociation notification message, a deauthenticaton notification message or a handoff message destined to the serving AP.

According to the present invention, an AP monitors message flow through it, receives a notification or detects successful registration by a wireless station with a SIP server, and update TSPECs of one or more classes on detection of a successful registration. An AP need monitor only the message flow that flows from and to a wireless station whose TSPEC is created. In one embodiment, an AP may update a TSPEC of AC_VO upon receiving a notification informing that a wireless station is registered with a SIP server so that a voice session may be initiated on its arrival. Alternatively, an AP may update a TSPEC of a class, upon receiving a notification informing that the AP that a wireless station is registered with a SIP server, so that a push service session or a pull service session that uses the class may be initiated on its arrival. In another embodiment, the AP updates the TSPEC or TSPECs of one or more classes upon association, reassociation, disassociation, deauthentication, or handoff of a wireless station.

According to the present invention, to collect per-class GoS information, an AP includes a per-class GoS information element in the beacon or in the probe response. The GoS information of a class may be a blocking probability of the class, which may be determined based on a class station count or TSPEC information of the corresponding class. Alternatively, a GoS information element comprises one or more class station counts for one or more classes. The AP may exchange per-class GoS information with one or more neighboring APs. The AP may sends a neighbor report response message or a roam management request message to a wireless station, or a roam management query message or autonomously, either in response to a neighbor report request message or autonomously. The neighbor report response message includes a per-class GoS information. The GoS information of a class may be a blocking probability of the class. Alternatively, the GoS information of a class is the per-class station count information. The AP may send a roam management request message to a wireless station either in response to a roam management query message or autonomously. The roam management request message includes a per-class GoS information, which may be a blocking probability of the class. Alternatively, the GoS information of a class is the per-class station count information.

According to the present invention, in a method and apparatus for load balancing, a wireless station receives one or more per-class GoS information elements from one or more APs. The wireless station associates (or reassociates) with an AP selected based on the GoS of the APs. The GoS may be a blocking probability for one or more classes of traffic generating or expected to be generated by a wireless station. The blocking probability of a class may be determined based on a class station count or the TSPEC information of the corresponding class. Alternatively, a wireless station may associate (or reassociate) with an AP that has a smaller class station count for one or more classes. In one embodiment, an AP does not respond to a probe request message if the current GoS is unacceptable. In a second embodiment, the AP responds to an authentication message with an authentication message in which a status code of unsuccessful is returned, if the current GoS becomes unacceptable.

The AP may accept or reject an association (reassociation) request based on one or more class station counts of one or more classes. An AP accepts an association (reassociation) request if a class station count increased by the association (reassociation) is acceptably small and rejects the request otherwise. Alternatively, an AP may accept or reject an association (reassociation) request, so that class station count difference between the AP and a neighboring AP may decrease. AP accepts or rejects association (reassociation) request based on GoS for one or more classes. The GoS of a class is determined based on the class station count or the TSPEC of the corresponding class. The AP may accept or reject association (reassociation) request based on the blocking probability of one or more classes. The blocking probability of a class is determined based on the class station count or the TSPEC information of the corresponding class. An AP may accept an association (reassociation) request if the blocking probability increased by the association (reassociation) is acceptably low and reject the request otherwise. Alternatively, an AP may accept or reject an association (reassociation) request so that the blocking probability difference between the AP and a neighboring AP decreases.

According to the present invention, the AP may send to an associated wireless station, or the wireless station may send to its associated AP, a disassociation message or a disassociation imminent message, if the current GoS is unacceptable, or the current value of a class station count is unacceptably large. The GoS may be the current blocking probability of a class. Alternatively, a wireless station may initiate a handoff procedure if the current GoS is unacceptable, or if the current value of station count within the serving AP is unacceptably large.

An AP may send a neighbor report response message or a roaming management query message to a wireless station, either in response to a neighbor report request message, a roaming management request message, or autonomously where the neighbor report response message includes roaming candidate preference of one or more neighboring APs. The roaming candidate preference list is determined based on the per-class station count information or TSPEC of one or more neighboring APs. The roaming candidate preference is determined based on the per-class station count information of one or more neighboring APs. Alternatively, the roaming candidate preference is determined based on the per-class TSPEC information of one or more neighboring APs.

The AP may reallocate the channel resource for one or more class according to the GoS of one more classes.

With proactive load management, however, voice-capable devices not on call may be load-balanced to adjacent cells in advance, by which the possibility of reaching the maximum number of voice calls can be significantly lowered. Therefore, it is required apparatuses and methods for proactively identifying and managing the load of 802.11 WLAN based on one or more per-class station counts where stations are classified according to access categories (ACs), user priorities (UPs), or services. It is also required apparatuses and methods for proactively identifying and managing the load of 802.11 WLAN based on per-class traffic specification (TSPECs) where a TSPEC is provisional or non-provisional according to the status of traffic streams (TSs).

The present invention is better understood upon consideration of the detailed description below and the accompanying drawings.

BRIEF DESCRIPTION OF THE DRAWINGS

Figure 1 shows an exemplary network configuration to which the present invention is applicable.

Figure 2 shows a procedure of initial network entry or handoff under 802.11.

Figure 3 shows an exemplary format in which the traffic generation information is included as an information element.

Figure 4 illustrates in further detail the steps carried out by a data terminal with an active voice application in an 802.11 WLAN, in accordance with one embodiment of the present invention.

Figure 5 shows an exemplary format for including roaming candidate preference information in a reassociation response frame (or another suitable data frame) from an AP.

Figure 6 illustrates providing roaming candidate preference for all candidate APs using a consolidated information element.

Figure 7 illustrates a service procedure in which the network entry steps 704 are performed after the application's configuration at step 703, in accordance with one embodiment of the present invention.

Figure 8 shows a method based on a per-class load table, in accordance with the present invention.

Figure 9 illustrates how load balancing may be performed when an AP receives a request from a wireless station, in accordance with one embodiment of the present invention.

DETAILED DESCRIPTION OF PREFERRED EMBODIMENTS

The present invention provides an apparatus and a method that proactively identifies and manage the load of an 802.11 WLAN based on one or more per-class station counts. In one embodiment, the wireless stations are classified according to access categories (ACs), user priorities (UPs), or services. In another embodiment, the present invention provides an apparatus and a method that proactively identify and manage the load of an 802.11 WLAN based on per-class traffic specification (TSPECs). The TSPEC may be provisional or non-provisional depending upon the status of traffic streams (TSs).
In this detailed description, load management according to the present invention is described using as an example a VoIP service, which uses a service initiation protocol (SIP) server for session initiation. However, the present invention is applicable also to other services such as video conferencing, push e-mail, online game, and multimedia streaming. Also, the use of a SIP server is merely exemplary and not required.

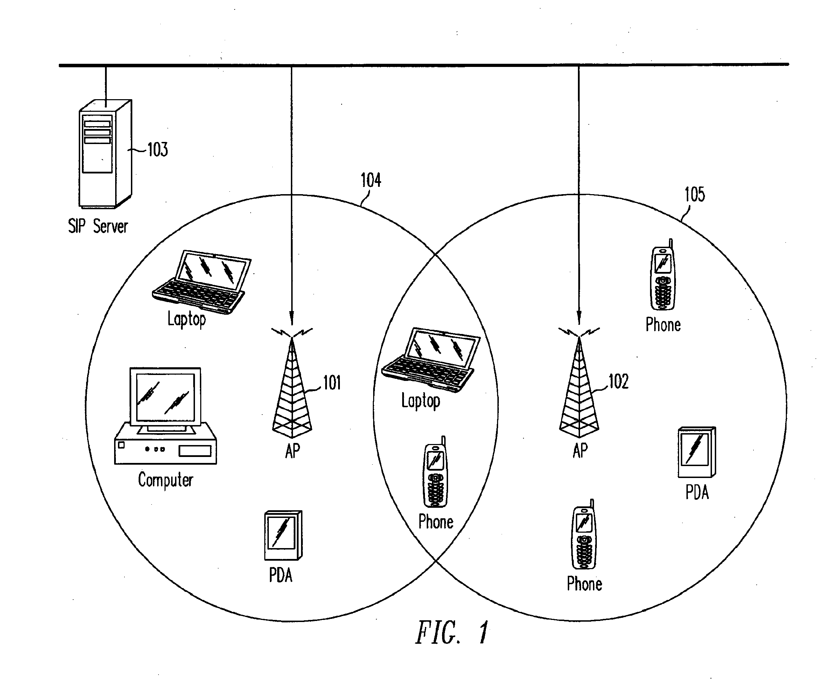

Figure 1 shows an exemplary network configuration to which the present invention is applicable. Figure 1 shows APs 101 and 102. APs 101 and 102 may be connected to a distribution system (DS) and to a backhaul network or the Internet through one or more switches or routers (not shown). Also shown in Figure 1 is SIP server 103, which may also be connected to the DS, the backhaul, or the Internet. AP 101 and 102 are shown providing coverage areas 104 and 105, which may take any of many shapes depending upon antenna configurations, obstacles, or channel conditions. (For illustrative purpose only, coverage areas 104 and 105 are shown as circular in Figure 1). A wireless station (e.g., telephones, laptop computers, desktop computers, and personal digital assistants (PDAs)) within the coverage of an AP may transmit and receive physical signals to and from the AP.
Depending on the deployment of APs and the location of wireless stations, a wireless station may be within the coverage areas of one or more APs, or beyond the coverage of any APs (in which case, communication is not possible). When a station is within the coverage areas of more than one AP, the station selects one of the APs. The present invention provides a load management method which help select an AP and results in an improvement in the grade of service (GoS) of the overall system.

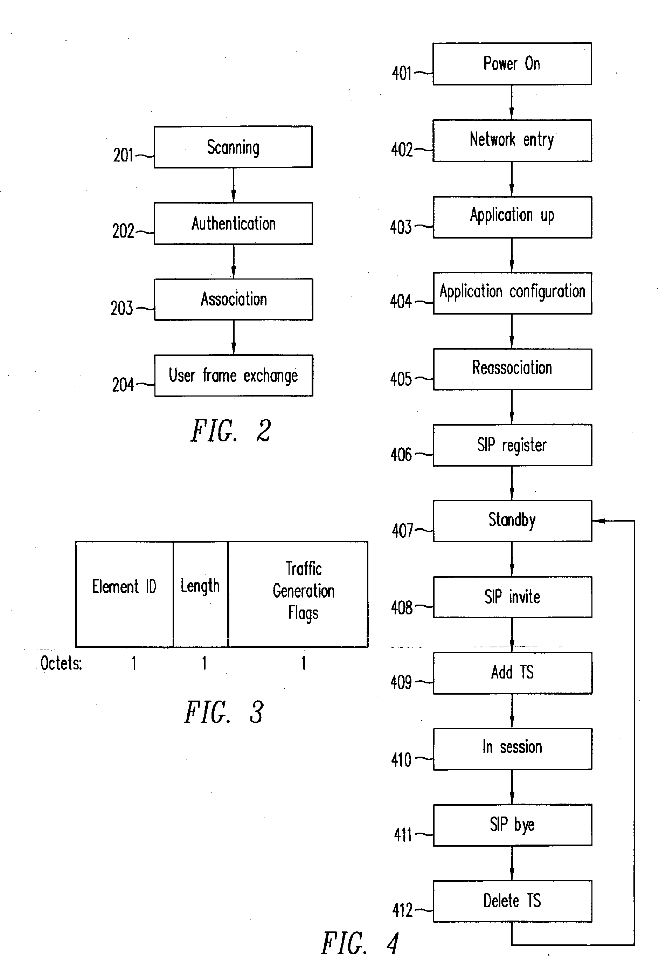

Figure 2 shows a procedure of initial network entry or handoff under 802.11. As shown in Figure 2, at step 201, a wireless station scans available channels to detect whether or not it is within a coverage area of an AP. Under 802.11, the wireless station may scan passively by listening to beacons, or scans actively by transmitting one or more probe request frames to solicit a probe response frame from an AP within the area. If an AP is successfully detected, the wireless terminal exchanges authentication frames with the detected AP (step 202). Authentication establishes the wireless station's authority to associate with the authenticated AP. The wireless station may authenticate with multiple detected APs. At step 203, the wireless station may associate with any one of the authenticated APs by transmitting an association request frame to the AP and receiving, in response, an association response frame from the AP. (If the station is making handoff, the wireless station transmits and receives a reassociation request frame and a reassociation response frame instead.) If association is successful, the wireless station has established an access point-station (AP-STA) mapping and enables the wireless station to use services of the distribution system. At step 204, having associated with an AP, the wireless station may transmit and receive data frames through the AP, including data frames that are actual service data units for voice, video, or other data applications. Under 802.11e, if the wireless stations and the AP both have QoS capabilities, the data frames may be transmitted in accordance with QoS.
Between steps 203 and 204, to strengthen security under 802.11, steps of 802.1X and 4-way handshakes (as defined in 802.11i) may be additionally required. In that case, a wireless station associated with an AP completes exchanges with the AP using frames for 802.1X and 4-way handshakes, before data frames of actual service data units may be exchanged. Load management under the present invention is applicable to any of steps 201-204 in Figure 2 and to the steps of 802.1X and 4-way handshakes, if present.

When a wireless station sends a frame to an AP in any of the steps discussed above, the wireless station may include traffic generation information, to allow the AP to collect per-class station count information. Traffic generation information may be included as an information element (e.g., with element identification (ID) and length) or as a field (in which case, element ID and length are not necessary). Wireless stations may be classified according to user priorities (UPs), access categories (ACs), services or other classifications. Figure 3 shows an exemplary format in which traffic generation information is included as an information element. A traffic generation element may contain a field for one or more traffic generation (TG) flags. In Figure 3, the TG flags field occupies one octet; however, the TG flags field may vary in length, depending upon the classification of wireless stations, according to the classification criteria and the number of classes in the classification. The element ID and length are not required if traffic generation information is included as a field in a frame. Each TG flag corresponds to a class and is set if the wireless station is expected to generate traffic belonging to the corresponding class. A TG flag of a class is set when a traffic stream (TS) of the class is active in the wireless station, or if the TS of the class is expected to be active sometime during the operation of the wireless station.

Table 1 below provides an exemplary format of the TG flags field in which a wireless station is classified according to eight user priorities (UPs). In Table 1, the traffic generation information element may have one or more TG flags, each corresponding to an UP. The traffic generation information element need not cover all eight UPs that are supported in the network. For example, in one embodiment in which terminals are classified for voice, a traffic generation element need only have TG flags for user priorities 6 and 7 (i.e., UP6 and UP7), but without TG flags for other user priorities. Likewise, when terminals are classified for video, the traffic generation element may have TG flags for user priorities 4 and 5 (i.e., UP4 and UP5), but not for other user priorities.

**Table1 Traffic Generation Flags Definition**

| Bit (s) | Description |
|---------|-------------|
| 0 | UP 0 Traffic |
| 1 | UP 1 Traffic |
| 2 | UP 2 Traffic |
| 3 | UP 3 Traffic |
| 4 | UP 4 Traffic |
| 5 | UP 5 Traffic |
| 6 | UP 6 Traffic |
| 7 | UP 7 Traffic |

As shown in Table 1, each bit in the TG flags field represents one of the eight user priorities. A bit value set to '1' or 'true' indicates, for example, that the wireless station expects to generate traffic in the corresponding user priority (UP). Similarly, a bit set to '0' or false indicates that the wireless station does not expect to generate traffic belonging to the corresponding UP. The TG flags may be constructed based on two aspects of an application's traffic generation: (a) whether or not the application generates traffic, and (b) whether the generated traffic is assigned a specific UP, and these aspects are known before actual traffic generation. For example, an application may be configured to generate traffic upon initiation of a user session and to use a specific UP for the generated traffic. The application may be so configured before initiation of the user session, and enters a standby mode in which the application waits for initiation of the user session. The application may supply these aspects of traffic generation to the AP upon initial configuration, or upon any changes of configuration. The traffic generation information are supplied by appropriately updating the TG flags. For example, a voice terminal (e.g., a dedicated voice terminal or a voice-capable data terminal with an active voice application that generates traffic) may set the UP6 (i.e., user priority 6) bit of its TG flags field.

Figure 4 illustrates in further detail the steps carried out by a data terminal with an active voice application in an 802.11 WLAN, in accordance with one embodiment of the present invention. As shown in Figure 4, at step 401, the terminal is powered on. At Step 402, an 802.11 network entry procedure (e.g., the procedure discussed above with respect to Figure 2) and an IP layer network entry procedures are performed. In any step of an 802.11 network entry procedure in which load management according to the present invention is applied, a traffic generation element may be included in a frame sent by the terminal. However, as the voice application has not been configured at this time, there may not be sufficient information for the terminal to determine whether or not traffic belonging to a certain class (e.g. UP6) may be generated. Thus, traffic generation information may be omitted. Alternatively, the TG flag bit for the class may be unset (i.e., set to '0') to indicate that the traffic generation of the class is not expected.

At step 403, the voice application is activated. Following activation, the application is configured for voice service in step 404. The application may be configured so that traffic is generated if a voice session is initiated and user priority 6 (UP6), for example, is to be used for the generated traffic. Because the voice application is now configured, the corresponding TG flag can be set. Thereafter, when a user session is initiated in which user priority 6 (i.e., UP6) traffic is expected to generated, the TG flag for UP6 is set. Since the terminal is already associated with an AP, the terminal sends, for example, a reassociation request frame to the AP at step 405 with the UP6 flag updated. The reassociation request frame updates the terminal's traffic generation information. If the reassociation request is successful, a reassociation response frame is sent back to the wireless station and no change in the terminal's association with the AP is required. According to one embodiment of the present invention, an AP receiving a reassociation request frame may use the traffic generation information for proactive load management. Therefore, in that example, if the GoS of UP6 is not appropriate, an AP may reject the reassociation request by sending a reassociation response frame which denies reassociation and provides the reason for the denial (i.e., the AP has determined, for load management reasons, not to reassociate with the wireless terminal). A reassociation response frame from an AP may also include roaming candidate preference information for one or more APs that indicates the preference of the AP and neighboring APs as a roaming candidate.

Optionally, if the traffic specification (TSPEC) of a potential traffic generation is known, the wireless station may send a provisional "add traffic stream" (ADDTS) request message with a provisional TSPEC. The provisional TSPEC informs the AP about the potential traffic stream. An AP does not allocate resource to the provisional traffic stream, but may consider the TSPEC in estimating the potential resource requirement.

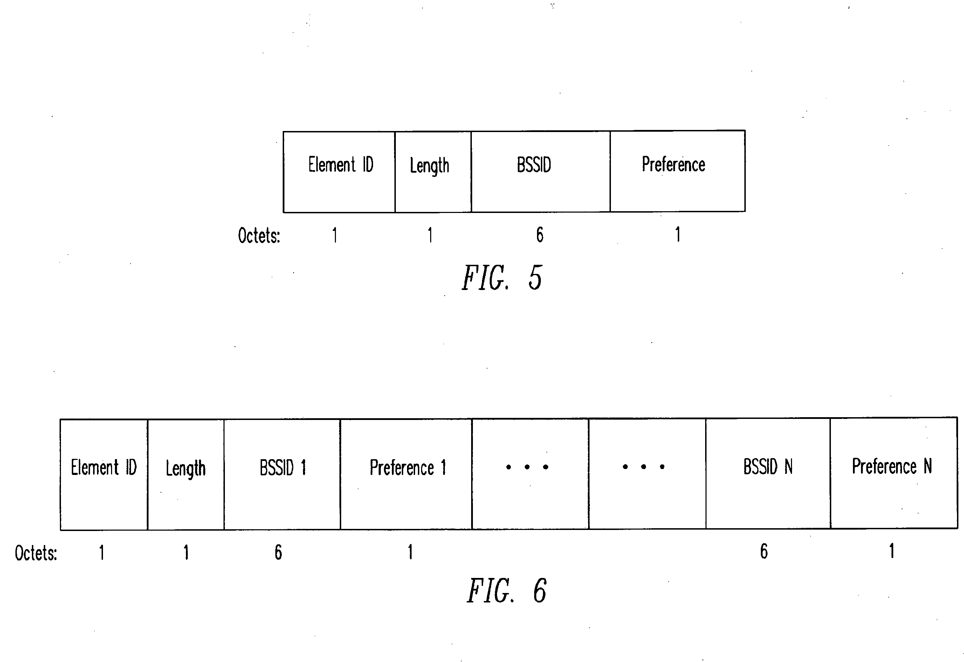

Figure 5 shows an exemplary format for including roaming candidate preference information in a reassociation response frame (or another suitable data frame) from an AP. As shown in Figure 5, the roaming candidate preference information includes a basic service set identification (BSSID) field, which contains the MAC address of the AP and an AP preference field. The AP preference field indicates the AP's network preference for roaming, which is a value ranging between 0 to 255. For example, a value of 0 may indicate that the AP is a "barred" AP. A value between 1 and 255 indicates a relative preference, with 255 indicating a maximum level of preference. Alternatively, the preference value may indicate an ordering of preferences for the roaming candidates for this wireless station. A value of 0 indicates a "barred" AP. A value between 1 and 255 provides an indication of an order of preference, with 1 indicating the most preferred AP within the given candidate list, a higher number indicating a lesser preference, relative only to entries with lower values in the preference fields, and an equal number indicating an equal preference. Figure 5 shows the roaming candidate preference information occupying one octet; the size, however, may vary depending on the number of preference levels or ordering.

Figure 5's roaming candidate preference may be used for each AP that is a roaming candidate. Alternatively, roaming candidate preference for all candidate APs may be delivered as a consolidated information element as shown in Figure 6. Although Figure 4 shows that an application's activation and configuration take place after the terminal has completed a network entry procedure, an application's activation and configuration may occur concurrently or before the network entry procedure, depending on the circumstances. Thus, appropriate TG flags in the traffic generation information element may be set to '1' or 'true' at any of the 802.11 network entry steps that comes after the application's configuration.

Returning to Figure 4, at step 406, the wireless terminal registered with an SIP server (e.g., SIP server 103) to allow initiation of a voice session. A session may be initiated by a user from the terminal, or from the network by another user. For a terminal capable of session initiation from the network, the terminal may be registered to a session server (e.g., SIP server 103), to allow a network initiated session to be routed to the terminal via the session server. A session may be initiated using an appropriate session protocol (e.g., SIP, skinny client control protocol (SCCP), and H.323). A session server capable of more than one of such protocols provides service to a variety of terminals in the network. At step 407, the terminal goes into a standby state to wait for the user session to be initiated. When SIP is used, a session may be initiated by a SIP invite message within the terminal or the arrival of SIP invite message from the network (step 408).

If a session is successfully initiated, at step 409, the terminal creates a traffic stream (TS) for the session by sending an ADDTS (Add Traffic Stream) request message to the serving AP. The application generates traffic specified by one of the user priorities corresponding to a set TG flag in the most recent traffic generation information provided to the AP. The UP of the TS is accordingly specified by the ADDTS request message. The UP in the ADDTS may, however, be different from that specified in the most recent traffic generation information supplied to the AP, as a result of negotiation during session initiation, taking into consideration the capability of the peer terminals and the resource available in the networks. For example, the ADDTS request message for a voice session (step 409) may specify UP7 for a voice TS, while the UP6 bit was set in a TG flag in the reassociation request frame of step 405. If there is no other application that may generate traffic of UP6, the traffic generation information held by the AP is inconsistent with the actual traffic generated by the terminal. In that event, update of traffic generation information may be necessary. To update the traffic generation information, the terminal may send, for example, a reassociation request message with the updated traffic generation information. On receiving the reassociation request message, the AP updates the traffic generation information of the terminal. However, if an application other than voice application exists that may also generate traffic of UP6, the reassociation request message is not necessary. Similarly, the traffic generation information held by the AP and the actual traffic generation by the terminal is inconsistent if there is no application generating traffic of UP7. To remove the discrepancy, the terminal may send a reassociation request message with the updated traffic generation information. In some instances, an AP may detect these discrepancies without receiving an reassociation request message based on the ADDTS request message and the traffic generation information it was holding. In that case, the AP may update the traffic generation information according to the ADDTS request message.

At step 410, the terminal, which is now on session, generates traffic of the UP specified in the ADDTS request procedure and in the traffic generation information. Because the load was proactively managed even before traffic is actually generated, the terminal on session is less likely to be forced to roam as a result of load management. At step 411, the session is terminated for example by a SIP bye message. At step 412, the traffic stream (TS) is deleted by a DELTS request message. As far as the application is active as configured in the most recent traffic generation information held by the AP, deletion of a TS does not affect the TG flag of the UP that the TS was using. The terminal returns to step 407 to wait for another session initiation.

A terminal may decide to make a handoff and roam to another AP after associating with the current AP, as a result of its movement, time-varying channel conditions, QoS of on-going sessions, or GoS. To determine an appropriate AP to handoff, a wireless station may send to the current AP a neighbor report request message, or a roam management query message, which may include a traffic generation information element. On receiving either of the messages, the AP may determine one or more APs appropriate as roaming candidates. In doing so, the AP may consider the channel condition, QoS, and GoS with the new AP. When considering GoS, the AP may take advantage of the traffic generation information element as included in the messages or as stored by itself. After the determination of candidate APs, the current AP may send a neighbor report response message to the wireless station, responding to the neighbor report request message in which the neighbor report response message includes roaming candidate preference of one or more neighboring APs. Similarly, the current AP may send a roam management request message to the wireless station in response to a roam management query message in which the roam management request message includes roaming candidate preference of one or more neighboring APs.

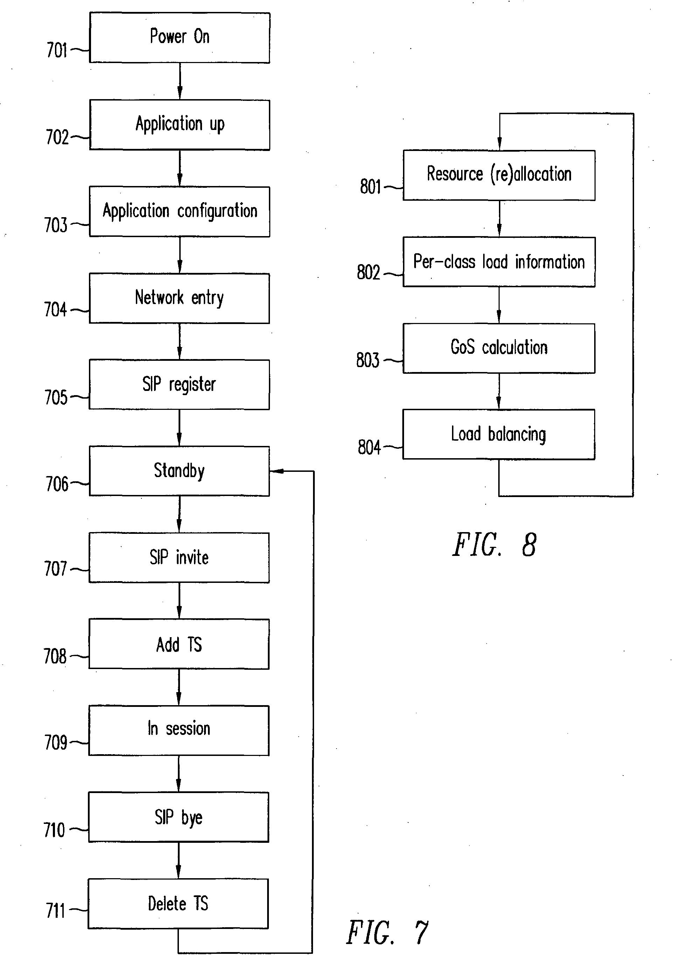

Figure 7 illustrates a service procedure in which the network entry steps 704 are performed after the application's configuration at step 703, in accordance with one embodiment of the present invention. In this case, a reassociation request to update traffic generation information, such is performed at step 405 in the embodiment of Figure 4, is not necessary. When a scanning step is performed at step 704 to enter a network, after application configuration step 703, the wireless station sends a probe request frame with one or more appropriate TG flags (e.g., UP6 bit for a voice application) in the TG flags field of a traffic generation information element set. An AP receiving such a probe request frame may use the included traffic generation information for proactive load management. In this example, if GoS of UP6 is not appropriate, an AP may not respond to the probe request, or may respond with a probe response frame that includes load management information. As discussed above, the load information may include a field or an information element which indicates that the association with the AP is not appropriate. Alternatively, the load management information may include roaming candidate preference information that indicates the preference of the AP or neighboring APs as a roaming candidate, as discussed above.

In an authentication step performed after the application's configuration at step 703 (e.g., an authentication step in the network entry procedure of step 704), a wireless station may send an authentication frame with an appropriate TG flag (e.g., the UP6 bit for a voice application) of a traffic generation information element set. An AP receiving such an authentication request frame may use the traffic generation information for proactive load management. In this example, if the GoS of UP6 is not appropriate, an AP may respond with an authentication frame including load management information, which has a field or an information element indicating that the association with the AP is not appropriate. The authentication may or may not be successful under the normal authentication procedure, which is managed independently of the load management. Alternatively, load management and authentication may be coupled, so that an AP may reject the authentication request based on load management consideration. In that case, the authentication message from the AP may have a field that indicates that the authentication is rejected and the reason of the rejection (i.e., the AP is not the appropriate AP for load management reasons). An authentication message from the AP may also have roaming candidate preference information that indicates the preference of the AP and neighboring APs as roaming candidates.

When an association step is performed after the application's configuration at step 703, a wireless station may send an association request frame with one or more appropriate TG flags (e.g., the UP6 bit for a voice application) in the traffic generation information element set. An AP receiving such an association request frame may use the traffic generation information for the purpose of proactive load management. In this example, if GoS of UP6 is not appropriate, an AP may reject the association request by sending an association response frame indicating the association denial, and the reason for the denial (i.e., the AP is not the appropriate AP in terms of load management). An association response frame from the AP may also include roaming candidate preference information that indicates the preference of the AP and neighboring APs as roaming candidates.

Steps 705 to 711 are substantially steps 406 to 412 of Figure 4, and their descriptions are therefore omitted to avoid repetition. Although voice service is used to illustrate the embodiments of the present invention over the 802.11 WLAN in Figure 4 and Figure 7, the present invention may be applicable to a terminal providing other push-type services, pull-type services, video conference, audio conference, push to talk, video streaming, and audio streaming.

Although the examples provided above classify terminals according to user priorities of the traffic generated, terminals may be classified according to other criteria, such as access categories and services. Table 2 and Table 3 show respectively exemplary definitions of traffic generation flags for terminal classifications under access categories and services. Table 2 shows TG flags for voice (AC_VO), video (AC_VI), best effort (AC_BE) and background (AC_BK), respectively. Likewise, Table 3 provides TG flags for push-type voice service, push-type video service, pull-type voice service, pull-type video service, game service, web browsing service, email service and other services, respectively.

**Table2 Traffic Generation Flags Definition (Classification by AC)**

| Bit (s) | Description |
|---------|-------------|
| 0 | AC_BK Traffic |
| 1 | AC_BE Traffic |
| 2 | AC_VI Traffic |
| 3 | AC_VO Traffic |

**Table3 Traffic Generation Flags Definition (Classification by service)**

| Bit (s) | Description |
|---------|-------------|
| 0 | Push-type Voice |
| 1 | Push-type Video |
| 2 | Pull-type Voice |
| 3 | Pull-type Video |
| 4 | Game |
| 5 | Web browsing |
| 6 | E-mail |
| 7 | ... |

An AP may maintain in memory traffic generation information for each station associated with it. The traffic generation information for a wireless station is updated based on the information provided by the wireless station, neighbouring APs, session servers, or other network entities. The traffic generation information may be obtained from monitoring the message flow through the AP and by detecting a successful registration of the wireless station with a session server (such as SIP server). An AP need monitor only a class of messages flowing through it when the corresponding TG flag for that class is set. By limiting the AP's monitoring to such traffic, the AP's processing overhead can be reduced. A wireless station may provide its own traffic generation information through any of: a probe request message, an authentication message, an association message, a reassociation message, a neighbor report request message, a roam management query message, an ADDTS message, and any types of frames or messages as discussed above.

Traffic generation information for each station associated with an AP may be maintained in a table form, such as shown in Table 4. Such a table may include, for example, a first column identifying the wireless station (e.g., by its MAC address or association ID (AID)), and a second column providing the traffic generation flags for each class of traffic (e.g. UP, AC, or service) for the corresponding station. In Table 4, user priority is shown as the classification criterion, and an exemplary value for the corresponding traffic generation flag is provided in parentheses:

**Table 4 Traffic generation information table**

| Station ID | Traffic generation flags |
|---|---|
| Station 1 | UP0 (True) |
| | UP1 (False) |
| | UP2 (True) |
| | UP3 (False) |
| | UP4 (True) |
| | UP5 (False) |
| | UP6 (True) |
| | UP7 (False) |
| Station 2 | UP0 (False) |
| | UP1 (False) |
| | UP2 (False) |
| | UP3 (False) |
| | UP4 (True) |
| | UP5 (False) |
| | UP6 (True) |
| | UP7 (False) |
| ... | ... |
| Station M | UP0 (False) |
| | UP1 (False) |
| | UP2 (False) |
| | UP3 (False) |
| | UP4 (True) |
| | UP5 (False) |
| | UP6 (True) |
| | UP7 (False) |

An AP may maintain station counts for each class (e.g., for each UP, AC, or service). For example, station counts may be maintained in a per-class load table, such as shown in Table 5. The AP may obtain the station count information from the traffic generation information table of Table 4, for example - i.e., the station count for UP6 may be obtained by totalling the number of stations that have their TG flags for UP6 set. An AP maintains station count and traffic generation information only for stations associated with it. Therefore, the maintained information is updated when an associated wireless station changes its association status (e.g., association, reassociation, disassociation, and deauthentication). The maintained information may also be updated upon receiving a notification from the network informing that an associated wireless station has made a handoff to another AP.

**Table 5 Per-class load table**

| Class | Station count | Session arrival rate | Average session lasting time | Average resource consumption |
|---|---|---|---|---|
| UP0 | UP0 Station count | UP0 Session arrival rate | UP0 Average session lasting time | UP0 Average resoucr consumption |
| UP1 | UP1 Station count | UP1 Session arrival rate | UP1 Average session lasting time | UP1 Average resouce consumption |

(continued)

| Class | Station count | Session arrival rate | Average session lasting time | Average resource consumption |
|---|---|---|---|---|
| UP2 | UP2 Station count | UP2 Session arrival rate | UP2 Average session lasting time | UP2 Average resouce consumption |
| UP3 | UP3 Station count | UP3 Session arrival rate | UP3 Average session lasting time | UP3 Average resouce consumption |
| UP4 | UP4 Station count | UP4 Session arrival rate | UP4 Average session lasting time | UP4 Average resouce consumption |
| UP5 | UP5 Station count | UP5 Session arrival rate | UP5 Average session lasting time | UP5 Average resouce consumption |
| UP6 | UP6 Station count | UP6 Session arrival rate | UP6 Average session lasting time | UP6 Average resouce consumption |
| UP7 | UP7 Station count | UP7 Session arrival rate | UP7 Average session lasting time | UP7 Average resouce consumption |

As shown in Table 5, the first column list the classes of traffic (e.g., by UP) according to the classification criterion used, the second column provides station counts for stations that may generate traffic for the corresponding classes. The station count for each class represents the number of potential contenders for the services offered to that class. Accordingly, both the AP and the network may use these station counts for load management, as explained above. Because some stations are not currently generating traffic, these stations may not be actually contending for the bandwidth for the service. Proactive load management based on traffic generation information or station count takes into account the potential contention of these stations. Telephone applications, for example, benefit by such proactive load management in controlling blocking probability -- an aspect of quality a user experiences when making a call.

Although so illustrated in Tables 4 and 5, the traffic generation information table and per-class load table need not cover all eight user priorities. To reduce memory and related processing requirements, the tables need encompass only the user priorities that are important to load management. For example, the tables need only have the rows for the UP6 and UP7 user priorities, if load management for voice is the primary objective.

Additionally, an AP may maintain in its memory session arrival rate information for each class. In that case, a per-class load table provides a column for the session arrival rates for the corresponding classes (e.g., the number of session arrivals per hour for each class). The session arrival information can be obtained by applying methods for measurement, prediction, or both, that are well-known in the industry to each class of traffic.

Likewise, an AP may also maintain in its memory average session duration ("lasting time") information for each class. In that case, a per-class load table provides a column for session durations for the corresponding classes (e.g., hours or minutes for each class). Session arrival information can be obtained by applying methods for measurement, prediction, or both, that are well-known in the industry for each class of traffic.

An AP may also maintain in its memory average resource requirement information for each class. In that case, the per-class load table provides a column for resource requirement (indicating for each corresponding class, for example, the average medium time required for a session). The medium time is the time within a specified time period (e.g., in a second) during which the traffic of a session accesses the wireless medium. As the actual resource required by a voice session, for example, may vary according to channel condition, channel load, the codec and the audio sample rate, and the 802.11 data rate, an average of the resource requirement is stored. An AP may also estimate resource requirement from provisional TSPEC provided by the terminals in determining the average resource requirement

Station count information or per-class load information of an AP may be exchanged with other APs to allow load management across multiple APs. Management of per-class load can be done based on a per-class load table. Figure 8 shows a method based on a per-class load table, in accordance with one embodiment of the present invention. As shown in Figure 8, at step 801, resource is allocated for terminals in each class. For example, each terminal may be allocated an amount of medium time, which is an amount of time allocated for the traffic in a class to access the wireless medium during a specified time period (for example in a second). Table 6 shows another example of a resource allocation. In this example, user priorities 3, 5, and 6 are allocated all the resources (i.e., if the traffic of user priorities 3, 5, and 6 are generated to at their allocated capacities, the traffic in the other user priorities is not serviced.) Only when the traffic from user priorities 3, 5 and 6 do not use all their allocated capacities, the traffic of other user priorities may be served. Other resource allocation schemes are possible, and even under the same resource allocation scheme, actual resource allocation may be varied according to such parameters as channel conditions or load status.

**Table 6 Resource allocation example**

| Class | Resource allocation |
|-------|---------------------|
| UP0 | 0 |
| UP1 | 0 |
| UP2 | 0 |
| UP3 | 0.2 |
| UP4 | 0 |
| UP5 | 0.3 |
| UP6 | 0.5 |
| UP7 | 0 |

At step 802, per-class load information is updated according to any of the methods discussed above. At step 803, the GoS for each class is obtained using the per-class load table of step 802 and the resource allocation of step 801. For example, the GoS of UP6 can be obtained using, for example, Erlang B formula, Extended Erlang B formula, Engset formula, Erlang C formula, or Binomial formula based on appropriate information on UP6 from the per-class load table and the resource allocation. GoS may be obtained for a voice service based on the formula for blocking probability $B_p$:

$$B_p = \frac{\left(\frac{\lambda}{\mu}\right)^N \binom{M}{N}}{\sum_{k=0}^{N}\left(\frac{\lambda}{\mu}\right)^k \binom{M}{k}}$$

where, $N$ is the voice capacity of an AP, $M$ is the number of associated terminals that may generate traffic of UP6, $\lambda$ is the session arrival rate, and $1/\mu$ is the average session duration. The voice capacity, N, may be obtained by dividing the medium time of UP6 by the average resource requirement of UP6. If the average resource consumption is 0.05 for example, the voice capacity (or capacity of UP6) would be 10. $M$ may be found from the station count of UP6 in the per-class load table (e.g., say, 12). $\lambda$ may be obtained from the session arrival rate of UP6 in the per-class load table (e.g., say, 0.2). $1/\mu$ can be obtained from the average session duration of UP6 in the per-class load table (e.g., say, 15 minutes or 0.25 hour). Using these values, GoS may be obtained as the blocking probability $Bp$ above. At step 804, the GoS value obtained at step 803 is compared with a GoS target of the load management.

If the GoS is unacceptable relative to the GoS target, a load balancing procedure may begin. When any of the session arrival rate, average session duration, and average resource consumption is not available at step 802, the GoS calculation at step 803 may be omitted. In that case, load balancing at step 804 may begin by comparing the available per-class load information of the AP with the per-class load information of other APs. For example, UP6 station count of the AP can be compared with the UP station counts of neighboring APs. If the UP6 station count at the AP is unacceptably larger, relative to the station counts of neighboring APs, a load balancing procedure may begin.

According to one embodiment of the present invention, an AP may send a disassociation message, disassociation imminent message, neighbour report response message, or a roam management request message to a wireless station if the current GoS is unacceptable for a certain class. Preferably, the wireless station does not have an on-going session -- to avoid a disruption of an on-going session -- and the TG flag for the class is set to true, so that the potential traffic is offloaded, thereby improving GoS. An AP may include per-class GoS information in the beacon or in the probe response; the per-class GoS information may be a GoS value, a station count, a session arrival rate, an average session duration, an average resource requirement, or any combination of these parameters.

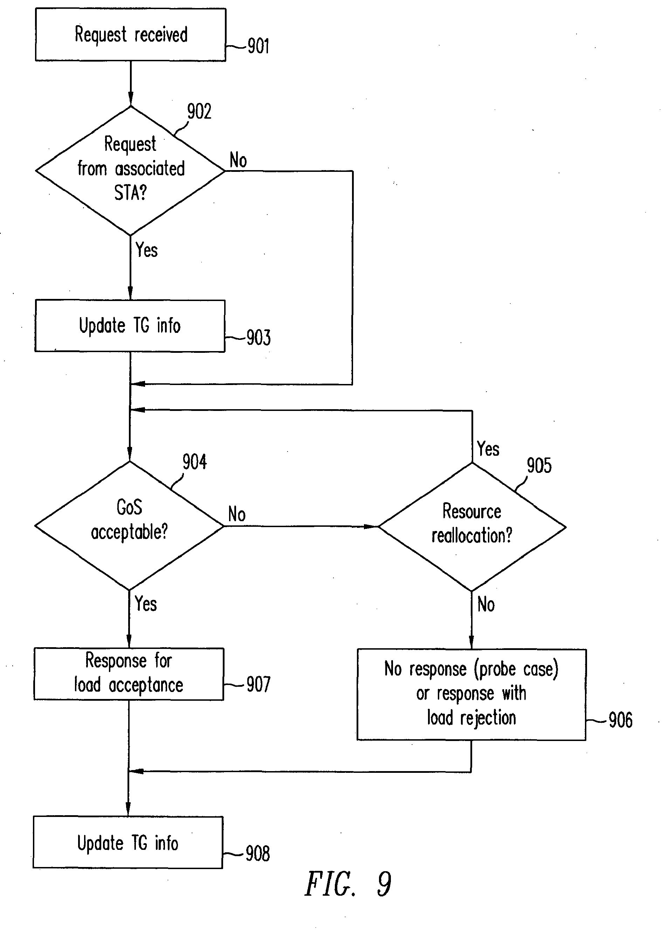

Figure 9 illustrates how load balancing may be performed when an AP receives a request from a wireless station, in accordance with one embodiment of the present invention. As shown in Figure 9, at step 901, a request in the form of a probe request frame, an authentication frame, an association request frame, a reassociation request frame, a neighbour report request frame, a roam management query frame, or an ADDTS request frame is received. At step 902, the request is examined to determine if it is sent from a wireless station which is already associated with the AP. If so, at step 903, traffic generation information of the wireless station is updated according to the traffic generation information in the request. At step 904, for each class with a traffic generation flag set, the GoS of the class is evaluated to determine if it is acceptable. (If traffic generation information is updated at step 903, GoS corresponding to the updated traffic generation information is used.) If the GoS is found acceptable, step 905 is undertaken and a response for load acceptance is sent back to the wireless station. Specifically, in response to the respective request frame, a probe response frame, an authentication frame, a neighbour report response frame, or a roam management request frame may be sent with an indication of high preference of the AP as a roaming candidate. Also, an association response frame or a reassociation response frame may be sent in response to the respective request frame with an indication of accepting the association. Also, an ADDTS response frame may be sent in response to an ADDTS request frame with an indication of successful creation of the traffic stream (TS).

If GoS is unacceptable at step 906 and, at step 907, the resource allocation is evaluated to determine if it is possible and desirable to admit the wireless station. For example, if GoS of UP6 is unacceptable due to the AP being already associated with too many voice terminals, while there are few terminals of other user priorities, an AP may consider increasing the resource allocation for UP6. If a resource reallocation is performed, step 904 tests whether the resulting GoS is now acceptable. If the resource reallocation is not performed, and the AP is already at full capacities of its resource allocation, a load rejection response is returned to the wireless station. Specifically, in response to the respective request frame, the probe response frame, the authentication frame, the neighbour report response frame, or the roam management request frame may be sent with an indication of the barred AP, the AP's low preference as a roaming candidate, or a rejection of association. Also, if the wireless terminal's request frame is an ADDTS request, the AP sends an ADDTS response frame with an indication of failure to create a traffic stream (TS).

The detailed description above is provided to illustrate specific embodiments of the present invention and is not intended to be limiting. Numerous modifications and variations within the scope of the invention are possible. The present invention is set forth in the following claims.

## Claims

1. A method for proactively managing the load of a wireless network, comprising:

    at an access point (101,102) of the wireless network, maintaining a load metric for wireless stations corresponding to expected traffic generation information TG provided by the wireless stations for a plurality of user priorities, wherein expected traffic generation includes information for traffic that is not currently active but is expected to be active subsequently; and
    receiving a message from a wireless station requesting association, the message comprising additional traffic generation information, the additional traffic generation information identifying at least one of the user priorities UP in which the requesting wireless station expects to generate traffic;
    determining whether the access point should grant the association request from the requesting wireless station based on the load metric for the identified at least one user priority; and
    responsive to a determination that the association request should be refused, denying the association request from the requesting wireless station.

2. A method as in claim 1, wherein the load metric for the plurality of user priorities UP comprises one or more of: station count and traffic specification of one or more traffic streams.

3. A method as in claim 2, wherein the traffic specification is designated provisional.

4. A method as in claim 1, wherein the access point exchanges load metric information among a plurality of access points.

5. A method as in claim 1, wherein the access point monitors message flow through it.

6. A method as in Claim 1, wherein the message comprises a message selected from the group consisting of: a probe request message, an authentication message, an association request message, a reassociation request message, a neighbor report request message, a roam management query message, or an ADDTS request message.

7. A method as in claim 1, wherein the wireless station is registered with a SIP server.

**Patentansprüche**

1. Verfahren zur proaktiven Verwaltung der Last eines drahtlosen Netzes, wobei das Verfahren Folgendes umfasst:

    an einem Zugangspunkt (101,102) des drahtlosen Netzes: Aufrechterhalten einer Lastmetrik für Funkstationen, die erwarteten Informationen der Datenverkehrserzeugung (Traffic Generation - TG) entspricht und von den Funkstationen für eine Vielzahl von Benutzerprioritäten bereitgestellt wird, wobei die erwartete Datenverkehrserzeugung Informationen für Datenverkehr umfasst, der gegenwärtig nicht aktiv ist, von dem jedoch erwartet wird, dass er nachfolgend aktiv wird; und
    Empfangen einer Nachricht von einer Funkstation, die eine Zuordnung anfordert, wobei die Nachricht zusätzliche Informationen zur Datenverkehrserzeugung umfasst, wobei die zusätzlichen Informationen zur Datenverkehrserzeugung mindestens eine der Benutzerprioritäten (User Priorities - UP) identifizieren, für die die anfordernde Funkstation eine Erzeugung von Datenverkehr erwartet;
    Bestimmen, ob der Zugangspunkt die Zuordnungsanforderung der anfordernden Funkstation basierend auf der Lastmetrik für die identifizierte mindestens eine Benutzerpriorität gewähren soll; und
    als Reaktion auf eine Bestimmung, dass die Zuordnungsanforderung abzulehnen ist, Verweigern der Zuordnungsanforderung von der anfordernden Funkstation.

2. Verfahren nach Anspruch 1, wobei die Lastmetrik für die Vielzahl von Benutzerprioritäten, UP, eines oder mehrere von Folgendem umfasst: Anzahl der Stationen und
   Datenverkehrsspezifikation von einem oder mehreren Datenverkehrsströmen.

3. Verfahren nach Anspruch 2, wobei die Datenverkehrsspezifikation vorläufig zugeordnet ist.

4. Verfahren nach Anspruch 1, wobei der Zugangspunkt Lastmetrikinformationen unter einer Vielzahl von Zugangspunkten austauscht.

5. Verfahren nach Anspruch 1, wobei der Zugangspunkt den Nachrichtenstrom überwacht, der durch ihn fließt.

6. Verfahren nach Anspruch 1, wobei die Nachricht eine Nachricht umfasst, die aus der Gruppe ausgewählt wird, die aus Folgendem besteht: eine Sondenanforderungsnachricht, eine Authentifizierungsnachricht, eine Zuordnungsanforderungsnachricht, eine Anforderungsnachricht für eine erneute Zuordnung, eine Anforderungsnachricht für einen Nachbarbericht, eine Roaming-Verwaltungsabfragenachricht oder eine ADDTS-Anforderungsnachricht.

7. Verfahren nach Anspruch 1, wobei die Funkstation bei einem SIP-Server registriert ist.

**Revendications**

1. Procédé servant à gérer de manière proactive la charge d'un réseau sans fil, comportant :

    au niveau d'un point d'accès (101, 102) du réseau sans fil, l'étape consistant à maintenir une mesure de charge pour des stations sans fil correspondant à des informations de génération de trafic prévu TG (traffic generation) fournies par les stations sans fil pour une pluralité de priorités d'utilisateur, dans lequel la génération de trafic prévu comprend des informations se rapportant au trafic qui n'est pas actuellement actif mais qui est prévu être actif par la suite ; et
    l'étape consistant à recevoir un message en provenance d'une station sans fil à des fins de demande d'association, le message comportant des informations de génération de trafic supplémentaires, les informations de génération de trafic supplémentaires servant à identifier au moins l'une des priorités d'utilisateur UP (user priorities) selon lesquelles la station sans fil émettant la demande s'attend à générer le trafic ;
    l'étape consistant à déterminer si le point d'accès doit accorder la demande d'association en provenance de la station sans fil émettant la demande en se basant sur la mesure de charge pour ladite au moins une priorité d'utilisateur identifiée ; et
    en réponse à une détermination comme quoi la demande d'association devrait être refusée, l'étape consistant à décliner la demande d'association en provenance de la station sans fil émettant la demande.

2. Procédé selon la revendication 1, dans lequel la mesure de charge pour la pluralité des priorités d'utilisateur UP comporte une ou plusieurs parmi : un décompte de stations et une spécification de trafic d'un ou plusieurs flux de trafic.

3. Procédé selon la revendication 2, dans lequel la spécification de trafic est désignée comme étant provisoire.

4. Procédé selon la revendication 1, dans lequel le point d'accès échange des informations de mesure de charge parmi une pluralité de points d'accès.

5. Procédé selon la revendication 1, dans lequel le point d'accès surveille le flux de messages le traversant.

6. Procédé selon la revendication 1, dans lequel le message comporte un message sélectionné dans le groupe constitué par : un message de demande de sondage, un message d'authentification, un message de demande d'association, un message de demande de réassociation, un message de demande de rapport de voisin, un message d'interrogation de gestion d'itinérance, ou un message de demande d'ADDTS.

7. Procédé selon la revendication 1, dans lequel la station sans fil est enregistrée au niveau d'un serveur de type SIP.

*FIG. 1*

EP 2 119 262 B1

201 — Scanning

202 — Authentication

203 — Association

204 — User frame exchange

*FIG. 2*

| Element ID | Length | Traffic Generation Flags |
|---|---|---|
| 1 | 1 | 1 |

Octets:

*FIG. 3*

401 — Power On

402 — Network entry

403 — Application up

404 — Application configuration

405 — Reassociation

406 — SIP register

407 — Standby

408 — SIP invite

409 — Add TS

410 — In session

411 — SIP bye

412 — Delete TS

*FIG. 4*

| Element ID | Length | BSSID | Preference |
|---|---|---|---|

Octets:     1     1     6     1

*FIG. 5*

| Element ID | Length | BSSID 1 | Preference 1 | • • • | • • • | BSSID N | Preference N |
|---|---|---|---|---|---|---|---|

Octets:     1     1     6     1     6     1

*FIG. 6*

701 — Power On

702 — Application up

703 — Application configuration

704 — Network entry

705 — SIP register

706 — Standby

707 — SIP invite

708 — Add TS

709 — In session

710 — SIP bye

711 — Delete TS

*FIG. 7*

801 — Resource (re)allocation

802 — Per-class load information

803 — GoS calculation

804 — Load balancing

*FIG. 8*

```
┌─────────────────────┐
│  Request received   │──901
└─────────────────────┘
           │
           ▼
        ╱╲ 902
      ╱      ╲
    ╱ Request   ╲         No
   ╱ from associated╲──────────┐
    ╲    STA?     ╱            │
      ╲        ╱               │
        ╲    ╱                 │
         Yes                   │
          │                    │
          ▼                    │
┌─────────────────────┐        │
│   Update TG info    │──903   │
└─────────────────────┘        │
          │                    │
          ◄────────────────────┘
          │
          ◄──────────────────────────────────┐
          │                                   │
          ▼                                   │Yes
        ╱╲ 904                             ╱╲ 905
      ╱      ╲                           ╱      ╲
    ╱   GoS    ╲          No           ╱ Resource  ╲
   ╱ acceptable? ╲────────────────────╱ reallocation?╲
    ╲          ╱                       ╲          ╱
      ╲      ╱                           ╲      ╱
        ╲  ╱                               ╲  ╱
         Yes                                No
          │                                 │
          ▼                                 ▼
┌─────────────────────┐        ┌──────────────────────────┐
│    Response for     │──907   │ No response (probe case) │
│  load acceptance    │        │   or response with       │──906
└─────────────────────┘        │    load rejection        │
          │                    └──────────────────────────┘
          │                                 │
          ◄─────────────────────────────────┘
          │
          ▼
┌─────────────────────┐
│   Update TG info    │──908
└─────────────────────┘
```

*FIG. 9*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040053624 A
- GB 2414899 A

- US 2005053046 A

### Non-patent literature cited in the description

- **J. RAYMOND ; C.V. MACARIO.** Cellular Radio - Principles and Design. McGraw Hill, 1993, 195-201

- Aruba Networks Announces Mobile Voice Over IP Enhancements to the Enterprise Mobile Edge -- Unique Voice Flow Classification Capability ensures Superior Voice Quality, Security and Scalability. Aruba Networks' press, 12 December 2005